# FASCICULE DE BREVET EUROPEEN

(11) **EP 2 688 845 B1**
(45) Date de publication et mention de la délivrance du brevet: **29.04.2020**
(21) Numéro de dépôt: 12714810.4
(22) Date de dépôt: 19.03.2012
(51) Int. Cl.: C25B 9/10, C02F 1/467, C25B 1/26, C02F 1/461

(54) **CELLULE ELECTROCHIMIQUE SYMETRIQUE**
SYMMETRISCHE BATTERIEZELLE
SYMMETRIC ELECTROCHEMICAL CELL

(30) Priorité: 22.03.2011 FR 1152381
(43) Date de publication de la demande: 29.01.2014
(73) Titulaire: Cleanea, 92800 Puteaux (FR)
(72) Inventeur: DESLANDES, Max, F-78690 Les Essarts Le Roi (FR); PRUVOST, Jean-Christophe, F-92800 Puteaux (FR); MOFAKHAMI, Arash, F-77760 Buthiers (FR); PLANARD, Philippe, F-91440 Bures Sur Yvette (FR)
(74) Mandataire: Plasseraud IP
(86) Numéro de dépôt international: PCT/FR2012/050571
(87) Numéro de publication internationale: WO 2012/127164

(56) Documents cités:
- US-A- 3 480 538
- US-A- 4 734 181
- US-A1- 2005 121 334

## Description

### Domaine de l'invention

La présente invention concerne les cellules électrochimiques à trois chambres.

### Etat de la technique

Les cellules électrochimiques à trois chambres sont connues dans l'art antérieur. Elles sont utilisées dans des applications où la mise en œuvre de trois flux liquides distincts est nécessaire ou avantageuse. Un exemple d'application est la production d'eau électrolysée, acide d'une part, basique d'autre part, telle que décrite dans le brevet US 7 238 272 et dans la demande de brevet US 2005/0121334.

Une cellule électrochimique à trois chambres comprend au moins une chambre anodique avec une anode, une chambre cathodique avec une cathode, et une chambre centrale, située entre la chambre anodique et la chambre cathodique. Une première membrane sépare de façon étanche à l'eau mais pas aux ions la chambre centrale de la chambre anodique ; une seconde membrane sépare de façon étanche à l'eau mais pas aux ions la chambre centrale de la chambre cathodique.

Chaque chambre de la cellule électrochimique est adaptée à l'écoulement de liquides. L'invention ne concerne donc pas les cellules électrochimiques alimentées en gaz et dépourvues de chambres aptes à recevoir un liquide, comme par exemple la cellule décrite dans le brevet US 3 480 538. L'écoulement des liquides qui a lieu au sein des trois chambres, et en particulier dans la chambre centrale, a une influence importante sur l'efficacité et la durée de vie de la cellule. En effet, une bonne répartition du flux liquide sur la totalité des membranes séparant les chambres permet de maximiser la surface utile de celles-ci. De plus, les membranes sont soumises à des déformations à cause des différences de pression entre les chambres. Il serait possible de résoudre ce problème en appliquant simplement la même pression dans les différentes chambres. Cette solution est envisageable en régime de fonctionnement stationnaire, mais on ne peut pas exclure des variations de pression dans les flux en amont et en aval des chambres. En outre, cette condition d'égalité des pressions est difficile à respecter dans les régimes de transition, en particulier lors du démarrage et de l'arrêt du dispositif électrochimique.

Il existe donc actuellement le besoin de disposer d'une cellule électrochimique à trois chambres dans laquelle la circulation du liquide dans la chambre centrale est améliorée.

Le brevet US 4 734 181 décrit une unité de cellule électrochimique ayant une architecture particulière.

Il est du mérite des inventeurs d'avoir conçu une cellule électrochimique à trois chambres améliorée.

### Résumé de l'invention

La présente invention a pour objet une cellule électrochimique à trois chambres, comportant :
- une chambre centrale d'acheminement d'une solution fluide,
- une première chambre latérale comportant une première électrode, la première chambre latérale étant séparée de la chambre centrale par une première membrane formant cloison entre la première chambre et la chambre centrale, et
- une deuxième chambre latérale comportant une deuxième électrode, la deuxième chambre latérale étant séparée de la chambre centrale par une deuxième membrane formant cloison entre la deuxième chambre et la chambre centrale,
caractérisée en ce qu'elle comporte une pièce centrale d'acheminement, d'écoulement et de diffusion de la solution fluide dans la chambre centrale, ladite pièce centrale étant symétrique par rapport à un plan médian entre les première et seconde membranes et parallèle auxdites membranes, la cellule électrochimique à trois chambres étant constituée de deux demi-cellules symétriques par rapport au plan médian, chaque demi-cellule formant un ensemble solidaire comportant une des chambres latérales et une des membranes, la chambre centrale étant formée par l'assemblage des deux demi-cellules et la pièce centrale étant encapsulée dans la chambre centrale entre les deux demi-cellules.

La présente invention a également pour objet un procédé de fabrication d'une cellule électrochimique selon l'invention, caractérisé en ce qu'il comporte les étapes consistant à :
- prévoir des première et deuxième demi-cellules, symétriques l'une par rapport à l'autre, chaque demi-cellule formant un ensemble solidaire qui comporte au moins une chambre, une électrode et une membrane, et
- assembler lesdites première et deuxième demi-cellules en encapsulant la pièce centrale entre les deux demi-cellules.

Enfin, un procédé de production d'eau électrolysée mettant en œuvre la cellule électrochimique selon l'invention, caractérisé en ce que :
- la chambre centrale est alimentée en un électrolyte, de préférence une solution aqueuse de chlorure de sodium ;
- une tension électrique de 3 à 6 V est appliquée entre les première et deuxième électrodes ;
- les première et seconde chambres latérales sont alimentées en eau et de l'eau électrolysée est prélevée des chambres latérales,
l'eau électrolysée produite dans la première chambre latérale étant acide, tandis que l'eau électrolysée produite dans la deuxième chambre latérale est basique,
est également un objet de la présente invention.

### Brève description des figures

D'autres caractéristiques et avantages de l'invention apparaîtront à l'examen de la description détaillée ci-après, et des dessins annexés sur lesquels :
- la **figure 1** illustre schématiquement une cellule électrochimique à trois chambres.
- la **figure 2** représente une coupe de la cellule, selon son plan médian.
- les **figures 3, 4 et 5** représentent un mode de réalisation de la pièce centrale de la cellule respectivement de profil, de face et en perspective.
- les **figures 6, 7 et 8** représentent un autre mode de réalisation de la pièce centrale de la cellule respectivement de coté, en perspective et de dessous.
- La **figure 9** représente une vue éclatée d'un mode de réalisation de la cellule selon l'invention.
- La **figure 10** représente une vue éclatée d'un autre mode de réalisation de la cellule selon l'invention.
- La **figure 11** représente une vue en coupe longitudinale d'un mode de réalisation de la cellule selon l'invention.

### Description détaillée de l'invention

Dans la présente invention, une cellule électrochimique désigne un dispositif dans lequel des réactions électrochimiques se produisent par l'application d'énergie électrique ou, réciproquement, qui fournit de l'énergie électrique par suite de réactions électrochimiques. Il peut s'agir en particulier d'une cellule d'électrolyse ou d'une pile.

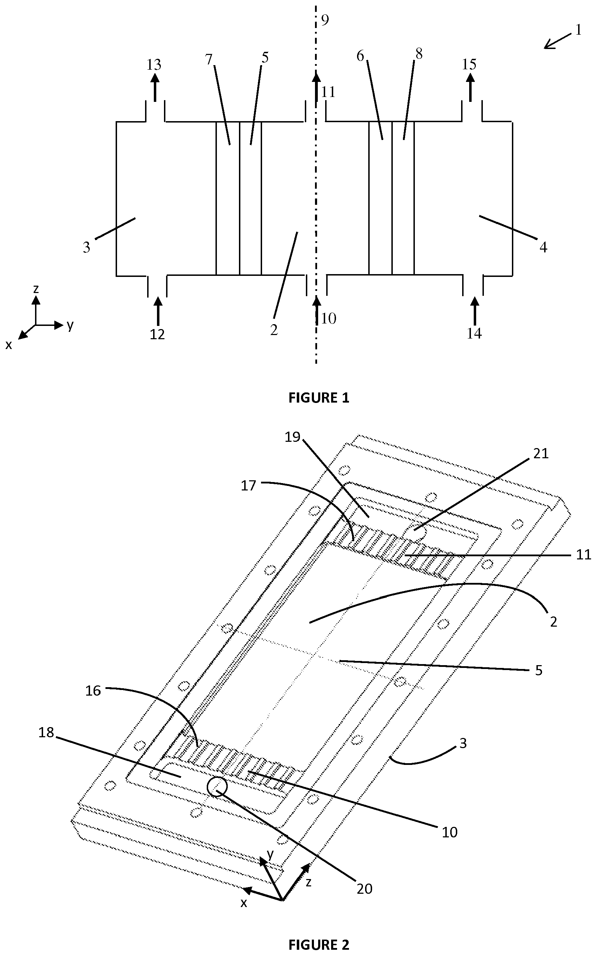

La **figure 1** illustre schématiquement une cellule électrochimique à trois chambres selon l'invention. La cellule 1 comporte une chambre centrale 2, une première chambre latérale 3 et une deuxième chambre latérale 4. La chambre centrale 2 est séparée de la première chambre latérale 3 par une première membrane 5. La chambre centrale 2 est également séparée de la deuxième chambre latérale 4 par une deuxième membrane 6 parallèle à la première membrane 5. La première chambre 3 comprend une première électrode 7 et la deuxième chambre 4 comprend une deuxième électrode 8. Selon un mode de réalisation préféré, qui est représenté sur la **figure 1****,** la première électrode 7 est placée contre la première membrane 5, et la deuxième électrode 8 est placée contre la deuxième membrane 6. En outre, la cellule 1 est conçue de manière à ce qu'il existe un plan médian 9, situé à égale distance entre les première et seconde membranes et parallèle auxdites membranes. Sur la figure 1, ce plan 9 est suivant les axes z (hauteur) et x (profondeur). La cellule selon l'invention comprend une pièce centrale d'acheminement, d'écoulement et de diffusion de la solution fluide dans la chambre centrale, ladite pièce centrale étant symétrique par rapport au plan 9. Chaque chambre est pourvue de voies d'acheminement de fluides liquides : dans la chambre centrale 2, le fluide liquide peut pénétrer par la voie 10 et sortir par la voie 11 ; dans la première chambre latérale 3, le fluide liquide peut pénétrer par la voie 12 et sortir par la voie 13 ; dans la deuxième chambre latérale 4, le fluide liquide peut pénétrer par la voie 14 et sortir par la voie 15.

De préférence, la chambre centrale de la cellule selon la présente invention comporte une voie d'acheminement du fluide s'étendant sensiblement sur toute la largeur de la chambre centrale. La **figure 2** laisse appaître une demie chambre centrale, coupée selon le plan médian de la cellule. La première membrane 5 forme la cloison entre la chambre centrale 2, au dessus, et la première chambre latérale 3, ici au dessous, non visible. Selon ce mode de réalisation préféré, la voie 10 par laquelle le fluide liquide pénètre dans cette chambre centrale 2 s'étend sensiblement sur toute la largeur de la chambre centrale 2. Une série de canaux 16, débouchant dans la chambre centrale et répartis de préférence uniformément sur toute la largeur de la chambre, permettent de distribuer de façon homogène sur la largeur le flux liquide. De préférence, la voie 11 par laquelle le fluide liquide sort de la chambre centrale 2 est conçue de la même manière, s'étendant sensiblement sur toute la largeur de la chambre centrale 2, et possédant une série de canaux 17.

En outre, la cellule comporte de préférence un réservoir tampon 18 en amont de la voie d'acheminement 10. Ce réservoir tampon 18 est représenté sur la **figure 2****.** Il a pour fonction d'améliorer l'homogénéité de la distribution du flux liquide dans le sens de la largeur. De préférence, la cellule comporte également un réservoir tampon 19 en aval de la voie 11 de sortie du flux liquide. Le raccordement hydraulique de la chambre centrale peut être réalisé via les issues 20 et 21, qui ont été ménagées respectivement dans les réservoirs 18 et 19. Ce système de raccordement présente l'avantage d'être facile à réaliser et de permettre l'utilisation de raccords que l'on trouve classiquement dans le commerce, par exemple des raccords vissés. La place et/ou la forme des raccordements n'a pas d'influence sur la répartition du flux dans la chambre centrale, ce qui est une amélioration par rapport à certains dispositifs de l'art antérieur. Les réservoirs tampons 18 et 19 permettent de garantir une distribution homogène de l'électrolyte dans la chambre centrale.

La cellule selon la présente invention comporte une pièce centrale qui est symétrique par rapport à un plan médian entre les première et seconde membranes et parallèle auxdites membranes. La fonction de cette pièce est d'acheminer le flux liquide pour permettre son écoulement et sa diffusion dans la chambre centrale vers les membranes. Selon un mode de réalisation préféré de la présente invention, la pièce centrale de la cellule comporte :
- une première paroi poreuse latérale en contact surfacique avec la première membrane,
- une deuxième paroi poreuse latérale en contact surfacique avec la deuxième membrane, et
- un ensemble d'éléments de liaison entre les deux parois.

L'ensemble d'éléments de liaison, également appelé nervures de liaison, est un ensemble d'éléments solides qui apporte à la pièce centrale sa rigidité mécanique. Cet ensemble favorise l'alimentation homogène des membranes par la diffusion et la dispersion du flux liquide. La porosité de chaque paroi de la pièce centrale a pour fonction principale de favoriser une diffusion homogène du fluide liquide à travers ces parois latérales vers les membranes.

L'espace de la chambre centrale est de préférence sensiblement occupé en totalité par la pièce centrale. La pièce centrale est de préférence légèrement comprimée une fois en place dans la cellule.

De façon avantageuse, les première et deuxième parois de la pièce centrale de la cellule selon l'invention sont réalisées dans un matériau poreux absorbant des contraintes mécaniques dues à des différences de pression respectives entre la première chambre et la chambre centrale, d'une part, et la deuxième chambre et la chambre centrale, d'autre part. De préférence, le matériau poreux est non conducteur. Il peut s'agir d'un matériau plastique. Les pores sont de dimension suffisante pour que le matériau poreux soit perméable aux fluides liquides de la chambre centrale à la pression de fonctionnement de la cellule. En particulier, les parois poreuses sont capables de laisser passer les ions de la chambre centrale vers les chambres latérales. Les pores ont de préférence un diamètre moyen inférieur à 200 µm (micromètre), de façon plus préférée compris entre 10 µm et 160 µm, de façon encore plus préférée entre 50 µm et 100 µm. Le matériau poreux selon cette variante de l'invention a pour fonction de supporter les pressions qui sinon s'appliqueraient aux membranes, d'absorber les contraintes mécaniques qui s'exercent sur les membranes et qui pourraient les endommager. Le matériau poreux absorbe notamment les variations des contraintes mécaniques qui s'exercent sur les membranes. Grâce à l'utilisation d'un matériau poreux, il n'est plus nécessaire de mettre en œuvre des plaques percées de trous, comme dans l'art antérieur, qui induisent des différences de pression ponctuelles sur la membrane. Ces pressions exercées localement peuvent occasionner le fluage de la membrane au travers des trous, ce qui, à terme, peut provoquer la perforation de la membrane.

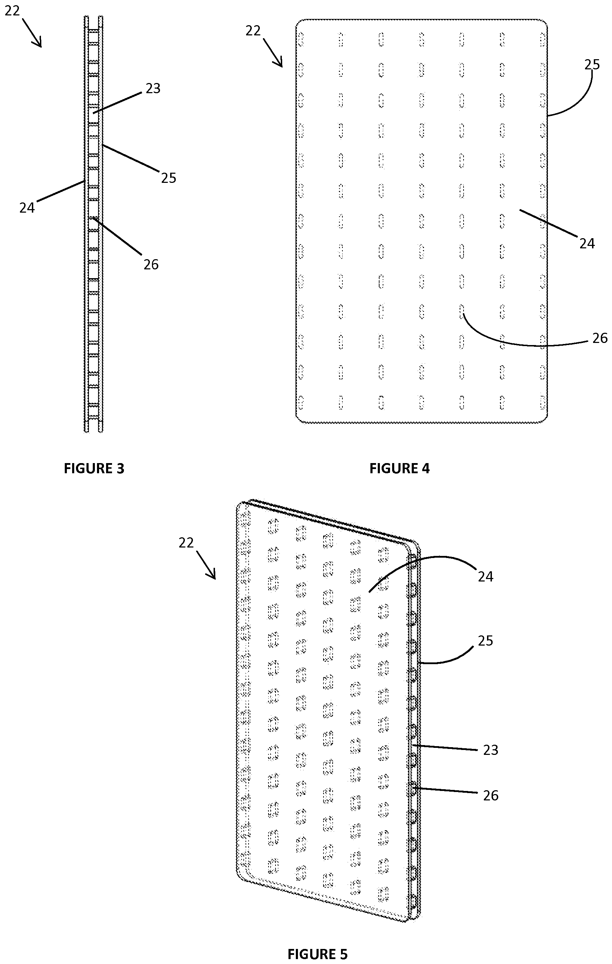

Les figures 3, 4 et 5 représentent un mode de réalisation de la pièce centrale 22. L'ensemble d'éléments de liaison 23 comporte des entretoises 26 entre les deux parois latérales 24 et 25, et les parois 24 et 25 et les entretoises 26 sont réalisées d'une seule pièce en un même bloc. Les entretoises peuvent prendre des formes diverses, en particulier la forme de barreau d'échelle.

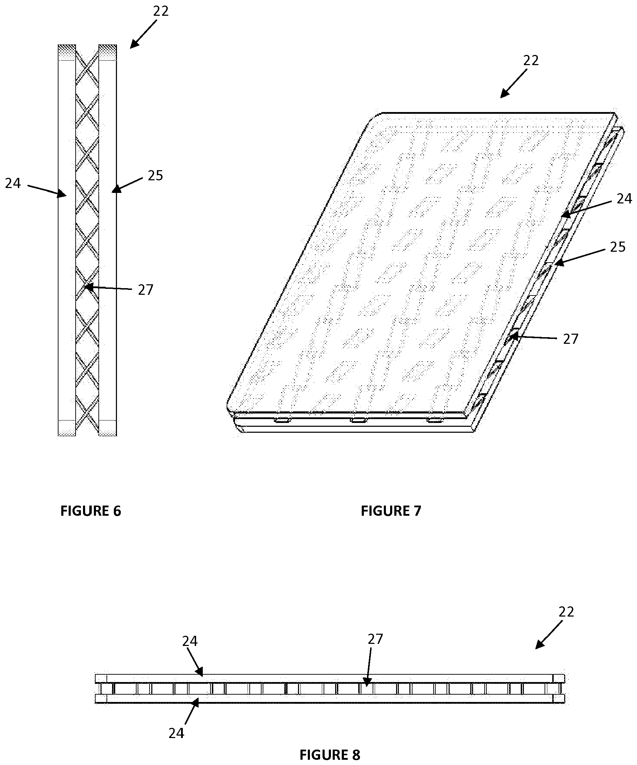

La pièce centrale est de préférence conçue dans un matériau inerte vis-à-vis des espèces chimiques présentes dans le fluide liquide, par exemple un plastique fritté comme un polyamide, par exemple du nylon, le polypropylène, l'ABS, un polycarbonate, un nylon composite ou un polystyrène. La pièce centrale peut être réalisée en un même bloc ou en plusieurs éléments séparés. La pièce centrale est choisie par exemple parmi :
- Une feuille en matériau fibreux comprimée, dont les deux faces constituent les première et deuxième parois latérales.
- Un ensemble composé de deux couches de matériau fibreux et un élément tel que représenté sur les figures 3,4 et 5 intercalée entre ces couches de matériau fibreux.
- Une plaque de mousse comprimée, insérée entre deux parois en plastique poreux. L'ensemble d'éléments de liaison est formé par le réseau de la mousse. En outre, la mousse comprimée joue un effet ressort permettant de garantir le bon plaquage des membranes sur les électrodes.
- Une plaque de matériau polymère poreux rigide, dont les deux faces constituent les première et deuxième parois latérales. Dans ce cas, le matériau polymère poreux rigide peut être fabriqué selon les techniques connues par l'homme du métier, par exemple par frittage de poudre ou par stéréolithographie.
- Deux plaques en plastique poreux avec, entre elles, des éléments ressorts. Un mode de réalisation est représenté sur les **figures 6, 7 et 8****.** Les deux parois latérales 24 et 25 sont équipées de languettes 27 qui prennent appui sur la paroi qui leur fait face. L'ensemble des languettes 27 forme un élément ressort entre les deux parois 24 et 25.

Selon un mode de réalisation préféré de la présente invention, la pièce centrale de la cellule est en matériau fibreux absorbant des contraintes mécaniques dues à des différences de pression respectives entre la première chambre et la chambre centrale, d'une part, et la deuxième chambre et la chambre centrale, d'autre part.

La cellule électrochimique à trois chambres selon l'invention comporte, outre la chambre centrale, une première et une seconde chambre latérale, comportant chacune une électrode. Selon le type de réaction chimique ayant lieu au niveau de l'électrode, celle-ci prend le nom d'anode ou de cathode.

Les membranes mises en œuvre dans la présente invention peuvent être celles classiquement utilisées par l'homme du métier dans de tels dispositifs électrochimiques. Il s'agit de préférence de membranes échangeuses d'ions. Par définition, une membrane échangeuse d'ions est une membrane perméable aux anions (membrane anionique) et/ou aux cations (membrane cationique) dont les propriétés résultent généralement de la présence de charges électriques fixées sur des sites. Il peut s'agir aussi d'une membrane bipolaire, constituée d'une face perméable aux anions et d'une face perméable aux cations. Les membranes cationiques utilisables dans la présente invention sont par exemple les membranes en Nafion® (commercialisées par la société DuPont) et les membranes décrites dans la demande internationale de brevet WO 2009/115732. Les membranes anioniques utilisables dans la présente invention sont par exemple le Nafion® modifié par imprégnation des ions Na+. D'autres membranes comme la membrane CERAPEM (commercialisées par la société CeramHyd) peuvent se présenter sous les trois formes anioniques, cationiques et bipolaires, et être utilisées dans ce dispositif.

Les électrodes sont formées de matériaux conducteurs électriques tels que ceux classiquement utilisés dans l'art antérieur. Il peut s'agir d'or, de platine, de fibres de carbone, de graphite, de nickel ou de titane.

Selon un mode de réalisation de la présente invention, les première et deuxième électrodes de la cellule sont en contact surfacique avec respectivement les première et deuxième membranes, et les première et deuxième électrodes sont réalisées en un matériau conducteur électrique poreux absorbant des contraintes mécaniques dues à des différences de pression respectives entre la première chambre et la chambre centrale, d'une part, et la deuxième chambre et la chambre centrale, d'autre part. Les pores du matériau de l'électrode ont de préférence un diamètre moyen inférieur à 200 µm (micromètre), de façon plus préférée compris entre 10 µm et 160 µm, de façon encore plus préférée entre 50 µm et 100 µm. L'utilisation d'un matériau poreux présente l'avantage que l'électrode diffuse de bien meilleure manière les fluides liquides et gazeux de la chambre dans laquelle elle se trouve, tout en ayant une surface lisse, continue et homogène. Il n'est plus nécessaire de concevoir des électrodes avec des orifices comme dans l'art antérieur. Ces orifices, en plus d'autoriser ponctuellement des différences de pression sur la membrane, ont pour inconvénient de réduire la surface utile de l'électrode.

Les électrodes en un matériau conducteur électrique poreux selon ce mode de réalisation peuvent être fabriquées selon les techniques classiques connues de l'homme du métier. De préférence, les première et deuxième électrodes sont réalisées en un matériau constitué de billes métalliques micrométriques compactées les unes aux autres en laissant des interstices entre les billes, formant les pores desdites électrodes. De préférence, le métal des billes est du titane. Le titane présente l'avantage d'être un métal conducteur électrique léger, résistant mécaniquement et chimiquement. En particulier, il résiste très bien à la corrosion chimique et est inerte par rapport aux réactions électrochimiques ayant lieu dans la cellule.

Au niveau des électrodes, un catalyseur est de préférence ajouté de manière à favoriser les réactions électrochimiques recherchées. Dans le cas de réactions à l'anode des ions chlorure, le catalyseur est de préférence choisi parmi l'oxyde d'iridium, l'oxyde de ruthénium, le mélange d'oxyde d'iridium et d'oxyde de ruthénium, et le mélange d'oxyde d'iridium, d'oxyde de ruthénium et d'oxyde de titane. Dans le cas de réactions à la cathode des ions sodium, le catalyseur est de préférence du platine. Le catalyseur peut être déposé, sous forme de couche mince, sur le matériau conducteur constituant l'électrode. Toutefois, dans le cas où l'électrode est en contact direct avec la membrane, il peut être envisagé de déposer une couche mince de catalyseur sur ladite membrane, sur la face en contact avec l'électrode.

Dans les réalisations de l'art antérieur, le montage de telles cellules nécessite l'empilement d'un certain nombre d'éléments, en particulier d'au moins un élément central définissant la chambre centrale de la cellule, équipé d'embouts permettant l'entrée et la sortie d'un flux liquide dans cette chambre.

Les inventeurs ont constaté que ces montages selon l'art antérieur présentaient des inconvénients. Il faut en effet que les différents éléments qui les constituent soient positionnés de façon précise les uns par rapport aux autres. La conception des cellules selon l'art antérieur ne permet pas de vérifier les bons accostages durant les opérations de montage. Il faut également que les jointures soient faites de façon uniforme pour éviter d'une part les fuites, et d'autre part des contraintes mécaniques hétérogènes exercées sur les pièces, qui pourraient provoquer leur vieillissement prématurée. En outre, l'entretien de la cellule nécessite un démontage complet de celle-ci. Il n'est pas possible de ne démonter qu'une partie de la cellule car le montage est solidaire.

Selon la présente invention, la cellule électrochimique à trois chambres est constituée de deux demi-cellules symétriques par rapport au plan médian, chaque demi-cellule comportant une des chambres latérales et une des membranes, caractérisée en ce que la chambre centrale est formée par l'assemblage des deux demi-cellules, la pièce centrale étant encapsulée dans la chambre centrale entre les deux demi-cellules.

Chaque demi-cellule peut comprendre un corps, une membrane, une électrode, un cadre de connexion et un capot. Une fenêtre peut avantageusement être aménagée dans le corps de façon à pouvoir loger la membrane, l'électrode et le cadre de connexion. Le capot peut ensuite venir se loger au-dessus de ces éléments de façon à former la chambre latérale et à fermer la demi-cellule. La chambre latérale est ainsi constituée de l'espace entre le capot et l'électrode.

Des issues peuvent être ménagées dans le capot pour permettre l'alimentation de la chambre latérale en fluide. En outre, le cadre de connexion peut de préférence être placé en contact avec l'électrode et comprendre une partie située à l'extérieur de la demi-cellule, permettant d'effectuer un raccordement électrique. Avantageusement, une ouverture est ménagée dans le capot et une partie du cadre de connexion se loge dans cette ouverture.

Le capot peut avantageusement être fixé directement au corps, grâce par exemple à un système de vis. Ainsi, la demi-cellule forme un ensemble solidaire, qui peut être assemblé et désassemblé indépendamment des autres parties de la cellule, en particulier de l'autre demi-cellule. Par ailleurs, l'étanchéité de la demi-cellule vis-à-vis de l'extérieur peut être réalisée grâce à un joint.

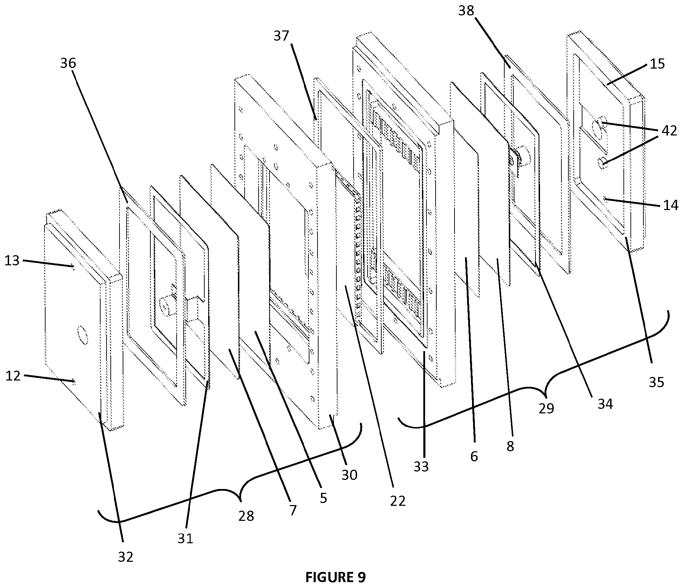

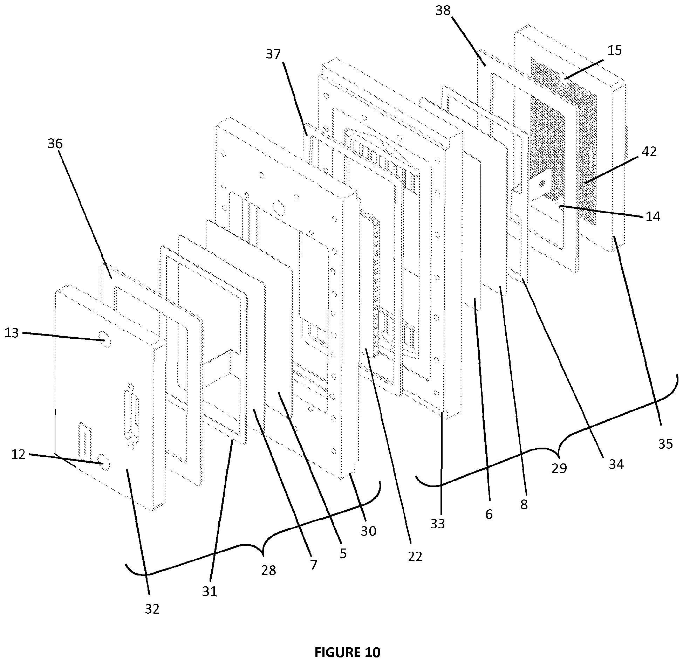

Les **figures 9** **et** **10** représentent une vue éclatée de deux modes de réalisation de la cellule selon l'invention. Chaque demi-cellule (28 et 29) est composée d'au moins 5 éléments. La première demi-cellule 28 est constituée d'un corps 30, d'une première membrane 5, d'une première électrode 7, d'un cadre de connexion 31 et d'un capot 32. De façon symétrique, la deuxième demi-cellule 29 est constituée d'un corps 33, d'une deuxième membrane 6, d'une deuxième électrode 8, d'un cadre de connexion 34 et d'un capot 35. Chaque demi-cellule peut être assemblée indépendamment de l'autre.

Par commodité, dans la suite de la description, les éléments seront cités sous la forme X/Y, X et Y étant des éléments correspondants, respectivement dans la première demi-cellule et dans la deuxième demi-cellule.

Dans le corps 30/33, une fenêtre est aménagée de façon à pouvoir loger la membrane 5/6, l'électrode 7/8 et le cadre de connexion 31/34. Le capot 32/35 vient ensuite se loger au-dessus de ces éléments de façon à fermer la demi-cellule.

Selon un mode de réalisation de la présente invention, le capot 32/35 possède un ou plusieurs plots 42. La **figure 9** représente un mode de réalisation dans lequel chaque capot 32/35 possède deux plots 42. La **figure 10** représente un mode de réalisation dans lequel chaque capot 32/35 possède un ensemble de plots 42. La hauteur de ces plots est adaptée à l'épaisseur des chambres latérales, de manière à ce que, lorsque la cellule est fermée, le sommet des plots se trouve contre l'électrode 7/8. Ces plots permettent ainsi de renforcer les électrodes.

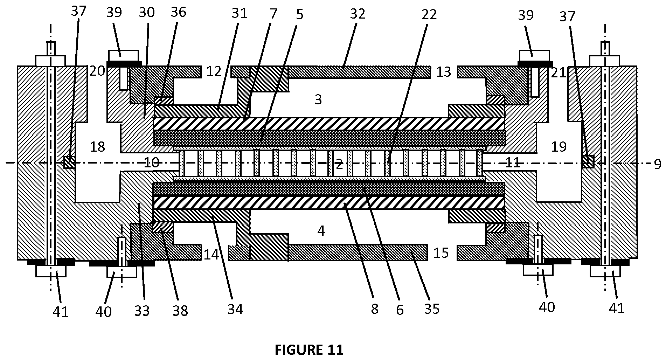

La **figure 11** schématise une vue en coupe longitudinale d'un mode de réalisation de la cellule selon l'invention. L'assemblage des différents éléments (corps 30/33, membrane 5/6, électrode 7/8, cadre de connexion 31/34 et capot 32/35) forme la chambre latérale 3/4. Le capot 32/35 est fixé au corps 30/33 grâce à un système de vis 39/40. Ainsi, chaque demi-cellule 28/29 forme un ensemble solidaire.

L'étanchéité de la demi-cellule 28/29 vis-à-vis de l'extérieur est de préférence réalisée grâce à un joint 36/38. L'étanchéité de la demi-cellule 28/29 par rapport à la chambre centrale est par contre obtenu selon ce mode de réalisation par la compression des différents éléments (membrane 5/6, électrode 7/8, cadre de connexion 31/34 et joints 36/38) entre le corps 30/33 et le capot 32/35, l'effort de compression étant donné par le système de vis 39/40.

D'un point de vue raccordement électrique, le cadre de connexion 31/34 est en contact avec l'électrode 7/8 et présente une zone menant à l'extérieur du capot 32/35, permettant d'effectuer un raccordement électrique. D'un point de vue raccordement hydraulique, des issues 12 et 13/14 et 15 sont ménagées respectivement dans les capots 32/35 pour alimenter les chambres latérales 3/4. Ce système de raccordement présente l'avantage d'être facile à réaliser, et de permettre l'utilisation de raccords que l'on trouve classiquement dans le commerce, par exemple des raccords vissés.

La géométrie de la cellule électrochimique selon ce mode de réalisation de la présente invention présente en outre l'avantage d'être compatible avec un processus d'usinage conventionnel. Chaque pièce mécanique a une forme simple qui peut être obtenue par usinage classique, qui ne nécessite pas l'emploi d'outillages onéreux et/ou complexes, comme par exemple des moules à injection. De préférence, le corps et le capot de la demi-cellule est réalisé dans une matière plastique résistant aux produits chimiques mis en œuvre ou générés par le procédé électrochimique.

La présente invention a également pour objet un procédé de fabrication d'une cellule électrochimique selon l'invention, caractérisée en ce qu'il comporte les étapes consistant à :
- prévoir des première et deuxième demi-cellules, symétriques l'une par rapport à l'autre, comportant chacune au moins une électrode et une membrane, et
- assembler lesdites première et deuxième demi-cellules en encapsulant la pièce centrale entre les deux demi-cellules.

Sur la **figure 11****,** on peut voir que la forme de la demi-cellule est conçue pour que, lorsque deux demi-cellules sont assemblées, une chambre centrale 2 soit formée. La pièce centrale 22 est encapsulée dans la chambre centrale entre les deux demi-cellules. De préférence, la pièce centrale 22 présente une épaisseur égale à l'espacement entre les deux membranes 5 et 6, résultant de l'assemblage des deux corps 30 et 33. L'étanchéité de la chambre centrale 2 vis-à-vis de l'extérieur est de préférence réalisée grâce à un joint 37 et un système de vis 41.

La cellule électrochimique à trois chambres selon la présente invention peut être utilisée de façon avantageuse dans un procédé de production d'eau électrolysée, acide d'une part, basique d'autre part.

La présente invention a donc également pour objet un procédé de production d'eau électrolysée mettant en œuvre la cellule électrochimique selon la présente invention, caractérisé en ce que :
- la chambre centrale est alimentée en un électrolyte, de préférence une solution aqueuse de chlorure de sodium ;
- une tension électrique de 3 à 6 V est appliquée entre les première et deuxième électrodes ;
- les première et seconde chambres latérales sont alimentées en eau et de l'eau électrolysée est prélevée des chambres latérales,
l'eau électrolysée produite dans la première chambre latérale étant acide, tandis que l'eau électrolysée produite dans la deuxième chambre latérale est basique.

L'électrode positive joue le rôle d'anode ; l'électrode négative joue le rôle de cathode. Les ions Cl⁻ sont attirés par l'anode et traversent la membrane pour parvenir dans la chambre anodique. De la même manière, les ions Na⁺ sont attirés par la cathode et traversent la membrane pour parvenir dans la chambre cathodique.

D'un point de vue électrochimique, au niveau de l'anode, on assiste à différentes réactions : d'une part l'électrolyse de l'eau, conduisant à la formation de dioxygène, d'autre part la réaction des ions chlorures, conduisant à la formation d'acide hypochloreux HClO :
- H₂O → 2 H⁺ + 1/2 O₂ + 2e⁻
- Cl⁻ + Cl⁻ → Cl₂ + 2e⁻

   Cl₂ + H₂O → HCl + HClO

   Cl⁻ + OH⁻ → HClO + 2e⁻

L'eau électrolysée obtenue dans la chambre latérale anodique est acide. De préférence, son pH est compris entre 3 et 6. Elle contient de l'acide hypochloreux HClO dans une concentration comprise de préférence entre 80 ppm et 400 ppm, de façon plus préférée entre 100 ppm et 300 ppm, et de façon encore plus préférée d'environ 150 ppm. Cette solution aqueuse possède des propriétés bactéricides importantes et peut avantageusement servir de produit désinfectant.

La concentration en acide hypochloreux dans l'eau électrolysée obtenue dans la chambre latérale anodique dépend des paramètres de fonctionnement de la cellule, en particulier de la tension et du courant appliqué, ainsi que de la concentration en électrolyte dans la chambre centrale et du débit des flux dans les trois chambres. Elle dépend également des caractéristiques techniques intrinsèques de la cellule, et en particulier de la dimension de la surface active des membranes et des électrodes. La cellule électrochimique selon la présente invention présente l'avantage d'avoir un bon rendement énergétique. Notamment, grâce à la présente cellule électrochimique, il est possible d'atteindre des concentrations en acide hypochloreux, par unité de surface active de membrane, très élevés.

Au niveau de la cathode, on assiste à l'électrolyse de l'eau avec formation de dihydrogène, avec production de soude NaOH :
- 2H₂O + 4e⁻ → H₂ + 2OH⁻
- Na⁺ + H₂O + 1e⁻ → NaOH + 1/2 H₂
- NaOH → Na⁺ + OH⁻

L'eau électrolysée obtenue dans la chambre latérale cathodique est basique. De préférence, son pH est compris entre 11 et 12,5. A cause de son alcalinité, cette solution aqueuse possède un effet émulsifiant sur des salissures contenant des huiles et/ou des protéines. Elle peut avantageusement servir de produit nettoyant.

### Exemples

La cellule électrochimique représentée sur les figures 9 et 11 est équipée :
- d'une électrode en Titane poreux de grade T1, présentant une porosité de 100 µm et une de perméabilité de 800 m³/h.m².kPa) et
- de deux membranes CERAPEM® 310.

Comme catalyseurs, IrO₂ a été déposée sur l'anode, et Pt sur la cathode. Les membranes et les électrodes ont une surface de 160 cm.²

Les paramètres de fonctionnement sont les suivants :
- Température (des flux liquides) : 14°C
- Pression dans la chambre centrale : 1 bar
- Débit de solution aqueuse de NaCl (300 g/l) dans la chambre centrale : 100 ml/min
- Débit d'eau dans chaque chambre latérale : 0,7 l/min
- Densité de courant : 0,15 A/cm² (soit un total de 24 A)
- Tension : 4,7 V

La mise en œuvre de cette cellule permet d'obtenir :
Coté anode (pour un débit de 0,7 1/min) :
- Concentration en HClO : 317 ppm
- pH = 2,72
- Volume d'oxygène produit = 40 ml/min

Côté cathode (pour un débit de 0,7 l/min) :
- pH = 11,37
- Volume d'hydrogène produit = 170 ml/min

## Revendications

1. Cellule électrochimique à trois chambres, comportant :
- une chambre centrale d'acheminement d'une solution fluide,
- une première chambre latérale comportant une première électrode, la première chambre latérale étant séparée de la chambre centrale par une première membrane formant cloison entre la première chambre et la chambre centrale, et
- une deuxième chambre latérale comportant une deuxième électrode, la deuxième chambre latérale étant séparée de la chambre centrale par une deuxième membrane formant cloison entre la deuxième chambre et la chambre centrale,
**caractérisée en ce qu'**elle comporte une pièce centrale d'acheminement, d'écoulement et de diffusion de la solution fluide dans la chambre centrale, ladite pièce centrale étant symétrique par rapport à un plan médian entre les première et seconde membranes et parallèle auxdites membranes, la cellule électrochimique à trois chambres étant constituée de deux demi-cellules symétriques par rapport au plan médian, chaque demi-cellule formant un ensemble solidaire comportant une des chambres latérales et une des membranes, la chambre centrale étant formée par l'assemblage des deux demi-cellules et la pièce centrale étant encapsulée dans la chambre centrale entre les deux demi-cellules.

2. Cellule selon la revendication 1, **caractérisée en ce que** la chambre centrale de la cellule comporte une voie d'acheminement du fluide s'étendant sensiblement sur toute la largeur de la chambre centrale.

3. Cellule selon la revendication 2, **caractérisée en ce qu'**elle comporte un réservoir tampon en amont de la voie d'acheminement.

4. Cellule selon l'une quelconque des revendications 1 à 3, **caractérisée en ce que** la pièce centrale de la cellule comporte :
- une première paroi poreuse latérale en contact surfacique avec la première membrane,
- une deuxième paroi poreuse latérale en contact surfacique avec la deuxième membrane, et
- un ensemble d'éléments de liaison entre les deux parois.

5. Cellule selon la revendication 4, **caractérisée en ce que** les première et deuxième parois de la pièce centrale de la cellule selon l'invention sont réalisées en un matériau poreux absorbant des contraintes mécaniques dues à des différences de pression respectives entre la première chambre et la chambre centrale, d'une part, et la deuxième chambre et la chambre centrale, d'autre part.

6. Cellule selon l'une ou l'autre des revendications 4 ou 5, **caractérisée en ce que** l'ensemble d'éléments de liaisons comporte des entretoises entre les deux parois latérales, et les parois et les entretoises sont réalisées d'une seule pièce en un même bloc.

7. Cellule selon l'une quelconque des revendications 1 à 3, **caractérisée en ce que** la pièce centrale est en matériau fibreux absorbant des contraintes mécaniques dues à des différences de pression respectives entre la première chambre et la chambre centrale, d'une part, et la deuxième chambre et la chambre centrale, d'autre part.

8. Cellule selon l'une quelconque des revendications précédentes, **caractérisée en ce que** les première et deuxième électrodes de la cellule sont en contact surfacique avec respectivement les première et deuxième membranes, et les première et deuxième électrodes sont réalisées en un matériau conducteur électrique poreux absorbant des contraintes mécaniques dues à des différences de pression respectives entre la première chambre et la chambre centrale, d'une part, et la deuxième chambre et la chambre centrale, d'autre part.

9. Cellule selon la revendication 8, **caractérisée en ce que** les première et deuxième électrodes sont réalisées dans un matériau constitué de billes métalliques micrométriques compactées les unes aux autres en laissant des interstices entre les billes, formant les pores desdites électrodes.

10. Cellule selon la revendication 9, **caractérisée en ce que** le métal des billes est du titane.

11. Procédé de fabrication d'une cellule électrochimique selon l'une quelconque des revendications précédentes, **caractérisée en ce qu'**il comporte les étapes consistant à :
- prévoir des première et deuxième demi-cellules, symétriques l'une par rapport à l'autre, chaque demi-cellule formant un ensemble solidaire qui comporte au moins une chambre, une électrode et une membrane, et
- assembler lesdites première et deuxième demi-cellules en encapsulant la pièce centrale entre les deux demi-cellules.

12. Procédé de production d'eau électrolysée mettant en œuvre la cellule électrochimique selon l'une quelconque des revendications 1 à 10, **caractérisé en ce que** :
- la chambre centrale est alimentée en électrolyte, de préférence une solution aqueuse de chlorure de sodium ;
- une tension électrique de 3 à 6 V est appliquée entre les première et deuxième électrodes ;
- les première et seconde chambres latérales sont alimentées en eau et de l'eau électrolysée est prélevée des chambres latérales,
l'eau électrolysée produite dans la première chambre latérale étant acide, tandis que l'eau électrolysée produite dans la deuxième chambre latérale est basique.

## Patentansprüche

1. Elektrochemische Dreikammer-Zelle, umfassend:
- eine zentrale Kammer zum Transport einer flüssigen Lösung,
- eine erste seitliche Kammer, die eine erste Elektrode umfasst, wobei die erste seitliche Kammer von der zentralen Kammer durch eine erste Membran getrennt ist, die eine Trennwand zwischen der ersten Kammer und der zentralen Kammer bildet, und
- eine zweite seitliche Kammer, die eine zweite Elektrode umfasst, wobei die zweite seitliche Kammer von der zentralen Kammer durch eine zweite Membran getrennt ist, die eine Trennwand zwischen der zweiten Kammer und der zentralen Kammer bildet,
**dadurch gekennzeichnet, dass** sie ein Mittelstück für Transport, Fluss und Diffusion der flüssigen Lösung in der zentralen Kammer umfasst, wobei das Mittelstück symmetrisch in Bezug auf eine Mittelebene zwischen der ersten und der zweiten Membran und parallel zu diesen Membranen ist, wobei die elektrochemische Dreikammerzelle aus zwei zur Mittelebene symmetrischen Halbzellen besteht, wobei jede Halbzelle eine integrale Anordnung bildet, die eine der seitlichen Kammern und eine der Membranen umfasst, wobei die zentrale Kammer durch die Gruppierung der beiden Halbzellen gebildet ist und das Mittelstück in der zentralen Kammer zwischen den beiden Halbzellen eingekapselt ist.

2. Zelle nach Anspruch 1, **dadurch gekennzeichnet, dass** die zentrale Kammer der Zelle einen Transportweg für Flüssigkeit umfasst, der sich im Wesentlichen über die gesamte Breite der zentralen Kammer erstreckt.

3. Zelle nach Anspruch 2, **dadurch gekennzeichnet, dass** sie ein Pufferreservoir oberhalb des Transportweges umfasst.

4. Zelle nach einem der Ansprüche 1 bis 3, **dadurch gekennzeichnet, dass** das Mittelstück der Zelle umfasst:
- eine erste poröse Seitenwand in Oberflächenkontakt mit der ersten Membran,
- eine zweite poröse Seitenwand in Oberflächenkontakt mit der zweiten Membran, und
- eine Anordnung von Verbindungselementen zwischen den beiden Wänden.

5. Zelle nach Anspruch 4, **dadurch gekennzeichnet, dass** die erste und die zweite Wand des Mittelstücks der erfindungsgemäßen Zelle aus einem porösen Material hergestellt sind, das mechanische Spannungen aufgrund der jeweiligen Druckunterschiede zwischen der ersten Kammer und der zentralen Kammer einerseits und der zweiten Kammer und der zentralen Kammer andererseits absorbiert.

6. Zelle nach einem der Ansprüche 4 oder 5, **dadurch gekennzeichnet, dass** die Gruppe von Verbindungselementen Abstandshalter zwischen den beiden Seitenwänden umfasst, und dass die Wände und die Abstandshalter in einem Stück als ein einziger Block hergestellt sind.

7. Zelle nach einem der Ansprüche 1 bis 3, **dadurch gekennzeichnet, dass** das Mittelstück aus Fasermaterial besteht, das mechanische Spannungen aufgrund der jeweiligen Druckunterschiede zwischen der ersten Kammer und der Zentralkammer einerseits und der zweiten Kammer und der Zentralkammer andererseits absorbiert.

8. Zelle nach einem der vorhergehenden Ansprüche, **dadurch gekennzeichnet, dass** die erste und die zweite Elektrode der Zelle in Oberflächenkontakt mit der ersten bzw. zweiten Membran stehen und die erste und die zweite Elektrode aus einem porösen, elektrisch leitfähigen Material bestehen, das mechanische Spannungen aufgrund der jeweiligen Druckunterschiede zwischen der ersten Kammer und der Zentralkammer einerseits und der zweiten Kammer und der Zentralkammer andererseits absorbiert.

9. Zelle nach Anspruch 8, **dadurch gekennzeichnet, dass** die erste und die zweite Elektrode aus einem Material bestehen, das aus mikrometrischen Metallkugeln besteht, die miteinander verdichtet sind, wobei Zwischenräume zwischen den Kugeln verbleiben, die die Poren der genannten Elektroden bilden.

10. Zelle nach Anspruch 9, **dadurch gekennzeichnet, dass** das Metall der Kugeln Titan ist.

11. Verfahren zur Herstellung einer elektrochemischen Zelle nach einem der vorhergehenden Ansprüche, **dadurch gekennzeichnet, dass** es die folgenden Schritte umfasst:
- Bereitstellung einer ersten und einer zweiten Halbzelle, die symmetrisch zueinander sind, wobei jede Halbzelle eine integrale Anordnung bildet, die mindestens eine Kammer, eine Elektrode und eine Membran umfasst, und
- Zusammenbau der ersten und der zweiten Halbzelle durch Einkapselung des Mittelstücks zwischen den beiden Halbzellen.

12. Verfahren zur Herstellung von elektrolysiertem Wasser unter Verwendung der elektrochemischen Zelle nach einem der Ansprüche 1 bis 10, **dadurch gekennzeichnet, dass**
- die zentrale Kammer mit Elektrolyt, vorzugsweise einer wässrigen Natriumchloridlösung, versorgt wird;
- eine elektrische Spannung von 3 bis 6 V zwischen der ersten und der zweiten Elektrode angelegt wird;
- die erste und die zweite Seitenkammer mit Wasser versorgt werden und den Seitenkammern elektrolysiertes Wasser entnommen wird,
wobei das in der ersten Seitenkammer erzeugte elektrolysierte Wasser sauer ist, während das in der zweiten Seitenkammer erzeugte elektrolysierte Wasser basisch ist.

## Claims

1. A three-chamber electrochemical cell, comprising:
- a central chamber for transporting a fluid solution,
- a first side chamber comprising a first electrode, the first side chamber being separated from the central chamber by a first membrane that forms a partition between the first chamber and the central chamber, and
- a second side chamber comprising a second electrode, the second side chamber being separated from the central chamber by a second membrane that forms a partition between the second chamber and the central chamber,
**characterized in that** it comprises a central section for transport, flow and diffusion of the fluid solution into the central chamber, said central section being symmetrical with respect to a mid-plane between the first and second membranes and parallel to said membranes, the three-chamber electrochemical cell consisting of two half-cells that are symmetrical with respect to the mid-plane, each half-cell forming a firmly joined together assembly comprising one of the side chambers and one of the membranes, the central chamber being formed by the assembly of the two half-cells and the central section being encapsulated in the central chamber between the two half-cells.

2. The cell as claimed in claim 1, **characterized in that** the central chamber of the cell comprises a fluid transport path that extends substantially over the entire width of the central chamber.

3. The cell as claimed in claim 2, **characterized in that** it comprises a buffer tank upstream of the transport path.

4. The cell as claimed in any one of claims 1 to 3, **characterized in that** the central section of the cell comprises:
- a first porous sidewall in surface contact with the first membrane,
- a second porous sidewall in surface contact with the second membrane, and
- a set of linking elements between the two walls.

5. The cell as claimed in claim 4, **characterized in that** the first and second walls of the central section of the cell as claimed in the invention are made from a porous material that absorbs mechanical stresses due to respective pressure differences between the first chamber and the central chamber on the one hand, and the second chamber and the central chamber on the other hand.

6. The cell as claimed in one or other of claims 4 and 5, **characterized in that** the set of linking elements comprises spacers between the two sidewalls, and the walls and spacers are produced from a single part made from one and the same block.

7. The cell as claimed in any one of claims 1 to 3, **characterized in that** the central section is made of a fibrous material that absorbs mechanical stresses due to respective pressure differences between the first chamber and the central chamber on the one hand, and the second chamber and the central chamber on the other hand.

8. The cell as claimed in any one of the preceding claims, **characterized in that** the first and second electrodes of the cell are in surface contact with, respectively, the first and second membranes, and the first and second electrodes are produced from a porous electrically conductive material that absorbs mechanical stresses due to respective pressure differences between the first chamber and the central chamber on the one hand, and the second chamber and the central chamber on the other hand.

9. The cell as claimed in claim 8, **characterized in that** the first and second electrodes are produced from a material consisting of micrometer-sized metal beads compacted with one another leaving interstices between the beads, which form the pores of said electrodes.

10. The cell as claimed in claim 9, **characterized in that** the metal of the beads is titanium.

11. A process for manufacturing an electrochemical cell as claimed in any one of the preceding claims, **characterized in that** it comprises the steps consisting in:
- providing first and second half-cells, that are symmetrical with respect to one another, each half-cell forming a firmly joined together assembly comprising at least one chamber, one electrode and one membrane, and
- assembling said first and second half-cells by encapsulating the central section between the two half-cells.

12. A process for producing electrolyzed water using the electrochemical cell as claimed in any one of claims 1 to 10, **characterized in that**:
- the central chamber is supplied with an electrolyte, preferably an aqueous solution of sodium chloride;
- a voltage of 3 to 6 V is applied between the first and second electrodes;
- the first and second side chambers are supplied with water and electrolyzed water is withdrawn from the side chambers,
the electrolyzed water produced in the first side chamber being acidic, whilst the electrolyzed water produced in the second side chamber is basic.
